# EUROPEAN PATENT SPECIFICATION

(11) **EP 2 867 513 B1**
(45) Date of publication and mention of the grant of the patent: **19.04.2017**
(21) Application number: 13765436.4
(22) Date of filing: 25.06.2013
(51) Int. Cl.: F16L 25/02, F16K 27/00, F02M 21/02

(54) **FLUID FLOW REGULATING DEVICE, PARTICULARLY FOR AUTOMOTIVE GAS SYSTEMS, HAVING HIGH RESISTANCE TO CORROSION**
FLÜSSIGKEITSDURCHFLUSSREGLER, INSBESONDERE FÜR FAHRZEUGGASSYSTEME MIT HOHEM KORROSIONSWIDERSTAND
DISPOSITIF DE RÉGULATION D'ÉCOULEMENT DE FLUIDE, EN PARTICULIER POUR SYSTÈMES DE GAZ D'AUTOMOBILE, AYANT UNE RÉSISTANCE À LA CORROSION ÉLEVÉE

(30) Priority: 28.06.2012 IT BS20120097
(43) Date of publication of application: 06.05.2015
(73) Proprietor: Emer S.p.a., 25135 Brescia (IT)
(72) Inventor: BRIZZOLARI, Giulio, I-i-25135 Brescia (IT); DEFILIPPI, Roberto, I-25135 Brescia (IT)
(74) Representative: Chimini, Francesco
(86) International application number: PCT/IB2013/055201
(87) International publication number: WO 2014/002003

(56) References cited:
- EP-A1- 1 659 329
- EP-A1- 2 234 197
- US-A1- 2007 194 569
- US-A1- 2011 272 045

## Description

### Field of the invention

The present invention relates in general to a fluid flow regulating device, in particular for automotive gas systems, comprising a body made of a first material and a component coupled to the body and made of a second material different from the first, as specified in the preamble of the independent claim 1. More specifically, the present invention relates to a multi-function valve for automotive gas systems, having a valve body in aluminium to which one or more stainless steel fittings are attached for connecting one or more respective pipes to the valve body.

### State of the art

The application to motor vehicles of transformation systems also able to fuel thermic motors by means of LPG or methane gas (CNG), thereby realising overall a mixed fuel supply (gas) has been known of for years. Automotive gas systems of the known type typically comprise a gas tank, a multi-function valve installed on the gas tank, a pressure regulator which brings the gas to the pressure needed to fuel the thermic motor, and a series of ducts with relative accessories.

US 2007/0194569 A1 discloses a fluid flow regulating device with a component, a valve body and a spacer, made in different materials.

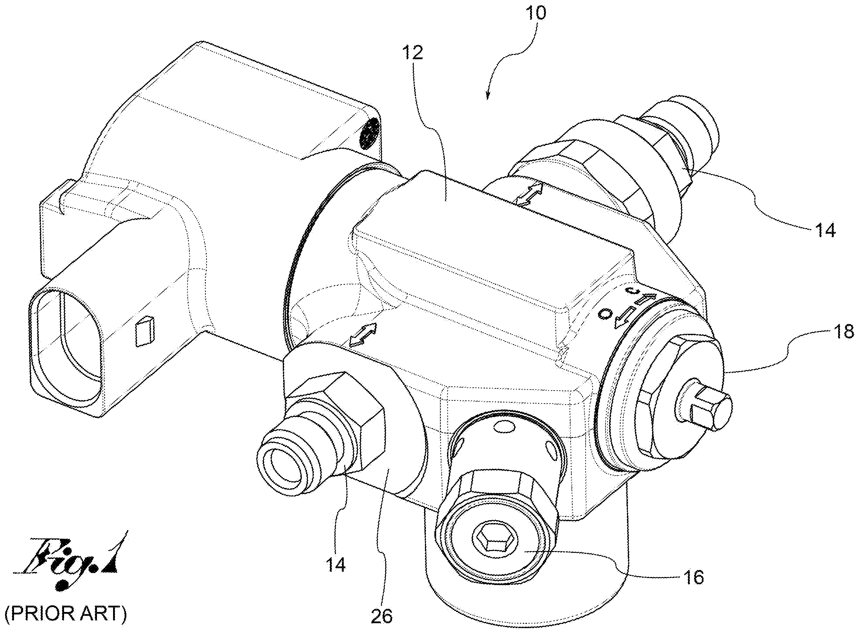

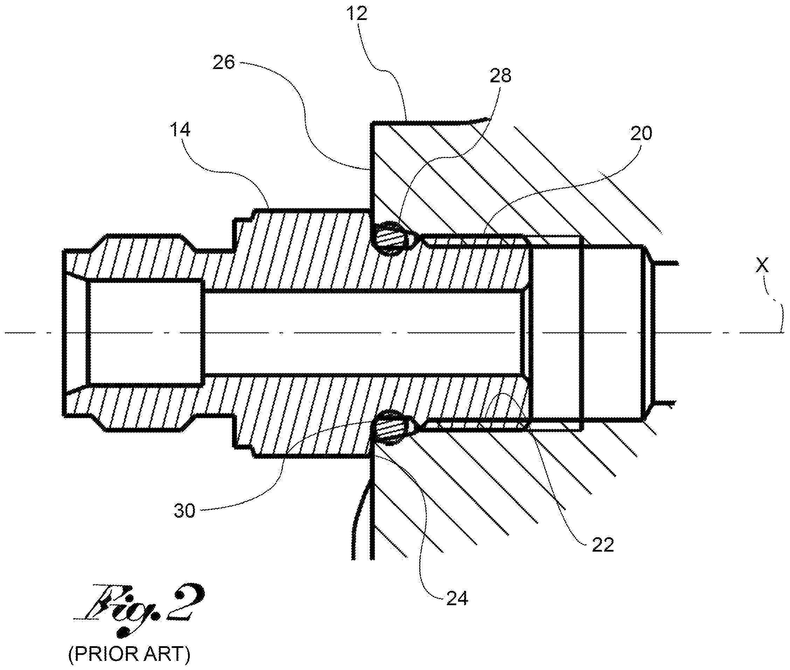

Figure 1 of the attached drawings shows a multi-function valve according to the prior art. The valve is globally denoted by reference numeral 10 and fundamentally comprises a valve body 12, one or more fittings 14 (in this case two fittings) assembled to the valve body 12 to each permit the attachment of a respective pipe (not shown) to the valve body, as well as a series of parts or devices of various types indicated by reference numerals 16 and 18. Figure 2 shows the coupling between one of the two fittings 14 with the valve body 12. The fitting 14 comprises a threaded cylindrical coupling portion 20 which is screwed into a corresponding threaded cylindrical seat 22 provided in the valve body 12. The component 14 further presents an abutment surface 24 lying in a plane perpendicular to the axis (indicated as x) of the coupling portion 20, which in the assembled condition of the valve 10 abuts against a flat surface 26 of the valve body 12 extending around the seat 22. An o-ring 28 is mounted on the fitting 14 between the coupling portion 20 and the abutment surface 24 and, in the assembled condition of the valve 10, makes a seal against a conical intake surface 30 of the seat 22 of the valve body 12. Such coupling enables the valve to satisfy the leak test required by regulations applying to the sector and by standards imposed by car manufacturers.

Currently, in automotive gas systems, multi-function valves have a valve body made of brass, while the various devices and/or fittings assembled to the valve body are mostly made from metals other than brass. The fittings are for example typically made of stainless steel. Brass being a material with an intermediate electric potential value compared to other metals, during the corrosion resistance tests required by current legislation and/or imposed by car manufacturers the electric arc triggered between the valve body and the fittings, whatever material the latter are made from, is not of such an entity as to cause galvanic corrosion above the acceptance limits imposed.

Given that the market demand is for valves, and devices in general, which are as lightweight as possible, especially in automotive gas systems with more than one cylinder and consequently with more than one multi-function valve, multi-function valves have recently been developed with valve bodies in aluminium weighing 40% less than the valves of the prior art and which permit a drastic reduction of the overall weight of the system which has positive repercussions on vehicle performance. Aluminium has a low electric potential. Consequently, if associated with a metal material having a medium/high electric potential (such as, for example, the stainless steel of the components) it acts as an anode and is thus subject to galvanic corrosion phenomena. The current valves with valve bodies in aluminium and components in stainless steel do not satisfy the corrosion resistance requisites imposed, in that during the corrosion resistance tests the corrosion reaches the sealed zone between the valve body and fittings entailing inevitable leaks of gas. In order to overcome such drawback, the application of a layer of grease between the valve body in aluminium and the fittings in stainless steel has been suggested, so as to prevent contact between these two materials and thereby prevent galvanic corrosion. However, such solution is affected by the drawback that it is difficult to control the application process of the grease and by the drawback that the layer of grease applied may be partially removed during the movement of the component and/or during the final assembly of the gas system.

### Purpose of the invention

The purpose of the present invention is therefore to provide a fluid flow regulating device of the type mentioned above, which has a greater resistance to corrosion compared to the prior art discussed above.

These and other purposes are fully achieved according to the present invention thanks to a fluid flow regulating device having the characteristics defined in independent claim 1.

Preferred embodiments of the invention are described in the dependent claims, the contents of which are understood as an integral and essential part of this description.

In brief, the invention is based on the idea of placing, between the body and each component coupled to it, a spacer element of an annular shape arranged around the component in such a way as to be in contact on one side against the body and on the other against an abutment surface of the component, preventing the direct contact between the latter and the body, and on the idea of using, as material for such spacer element, a material having an intermediate electric potential between that of the material of the body and that of the material of the component. The interposition of such a spacer element between the body and each component coupled to the body means that the electric arcs which are triggered, in conditions favourable to corrosion, between the material of the spacer element and the material of the component and between the material of the spacer element and the material of the body are less intense than those which would be directly triggered between the materials of the body and of the component in the absence of the spacer element, with the result that the corrosion generated by such arcs is less aggressive.

Preferably, as materials for the body and for the aforesaid component coupled to the body aluminium and stainless steel are used respectively.

Preferably, the device according to the invention is a multi-function valve and comprises, as component coupled to the valve body, one or more fittings each for attaching a respective pipe to the valve body

### Brief description of the drawings

The characteristics and advantages of the present invention will be evident from the detailed description below, made by way of a non-limiting example with reference to the appended drawings wherein,
figure 1 shows a perspective view of a multi-function valve for an automotive gas system according to the prior art;
figure 2 shows an axial cross-section of the coupling between the valve body and one of the fittings of the multi-function valve in figure 1;
figure 3 shows a perspective view of a multi-function valve for an automotive gas system according to an embodiment of the present invention;
figure 4 shows an axial cross-section of the coupling between the valve body and one of the fittings of the multi-function valve in figure 3; and
figures 5a to 5c show in axial cross-section some embodiments of the spacer element positioned between the valve body and the fitting of the multi-function valve in figure 3.

### Detailed description of the invention

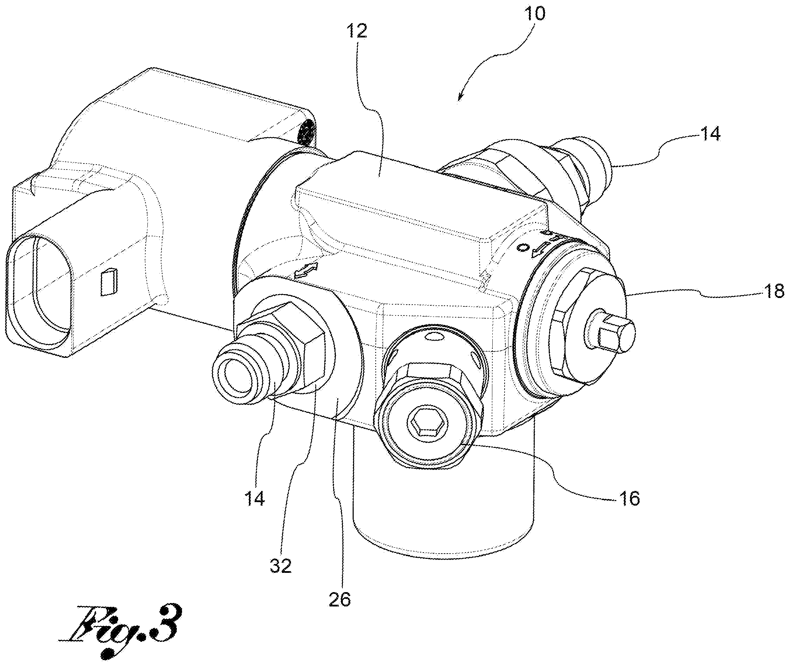

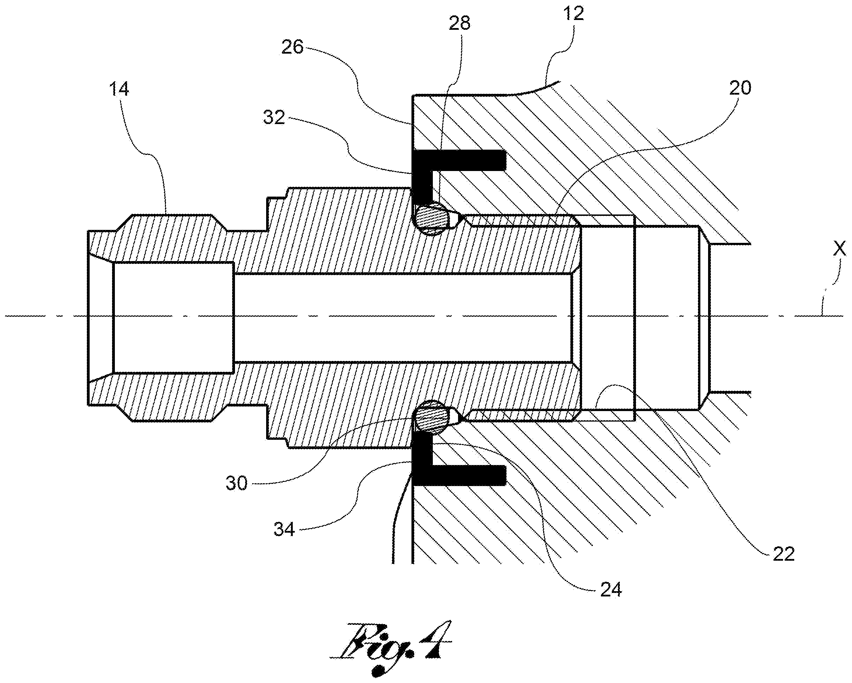

With reference initially to figures 3 and 4, in which parts or elements identical or corresponding to those in figures 1 and 2 (prior art) have been given the same reference numerals, reference numeral 10 globally denotes a multi-function valve (such as for example a fluid flow regulating device according to the invention), destined in particular to be installed on a gas tank (not shown) of an automotive gas system. The valve 10 fundamentally comprises a valve body 12, one or more fittings 14 (in the example two fittings) assembled to the valve body 12 to each permit the attachment of a respective pipe (not shown) to the valve body, as well as a series of members or devices of various types (not relevant for the purposes of the present invention) indicated by reference numerals 16 and 18.The valve body 12 is made of aluminium, while the fittings 14 are made of stainless steel.

As shown in detail in figure 4, each fitting 14 comprises a coupling portion 20 by means of which it is coupled to the valve body 12. In the embodiment shown, the coupling portion 20 is made as a threaded cylindrical portion and is screwed into a corresponding threaded cylindrical seat 22 provided in the valve body 12. The fitting 14 further presents an abutment surface 24, lying in a plane perpendicular to the axis (indicated as x) of the coupling portion 20. An o-ring 28 is mounted on the fitted 14 between the coupling portion 20 and the abutment surface 24 and, in the assembled condition of the valve 10, forms a seal against a conical intake surface 30 of the seat 22 of the valve body 12.

In order to reduce the galvanic corrosion produced, in particular conditions of humidity and/or salinity, as a result of the difference in electric potential between the aluminium of the valve body and the stainless steel of the fittings, according to the invention, between the valve body 12 and each fitting 14 a spacer element 32 of an annular shape is provided which is arranged around the seat 22 of the valve body 12 in such a way as to be in contact on one side against said valve body and on the other against the abutment surface 24 of the fitting 14, preventing direct contact between the valve body and the fitting, and which is made of a material having an electric potential value between that of the aluminium and that of the stainless steel, in particular of a metal material, such as for example brass or copper.

The spacer element 32 is advantageously housed in the valve body 12 so as to expose towards the outside of the valve body only one flat surface 34, which is positioned flush with a flat surface 26 formed by said valve body around the seat 22 and which the abutment surface 24 of the fitting 14 is in contact with. This way, the spacer element 32 does not entail variations in the dimensions of the valve compared to the prior art.

As said, the material of the spacer element 32 is chosen so as to have an intermediate electric potential value between that of the aluminium and that of the stainless steel. Consequently, during the corrosion resistance tests which the valve must undergo electric arcs are triggered both between the material of the spacer element 32 and the stainless steel of the fitting 14, and between the material of the spacer element 32 and the aluminium of the valve body 12, such electric arcs being less intense than those which would be triggered between the aluminium and stainless steel in the absence of the spacer element and thereby generating less aggressive corrosion.

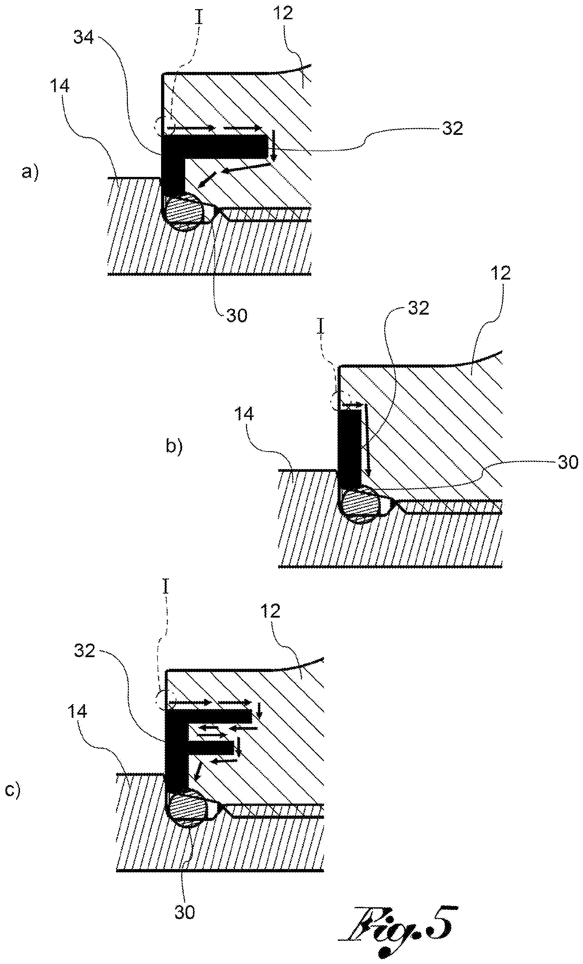

According to an advantageous aspect of the invention, in order to preserve the valve body 12, in particular the sealing zone between the valve body 12 and the fitting 14, that is to say the zone which the o-ring 30 presses on, the spacer element 32 is sized and shaped so as to increase the distance which the pitting generated by corrosion must cover to reach such sealing zone starting from the triggering point of the corrosion, during the corrosion resistance tests. To such purpose, figures 5a to 5c show some possible shapes of the cross-section of the spacer element 32and the path of the pitting starting from the triggering zone of the corrosion (marked by a circle I with dotted line) is shown by the arrows, zone which is positioned around the contact point between the valve body 12 and the fitting 14 and is exposed to the outside environment in which the valve 10 is located. In particular, the L and F shapes shown in figures 5a and 5c permit, compared to the shape shown in figure 5b, a significant lengthening of such path without excessively increasing the difference between the outer diameter and inner diameter of the spacer element 32, and therefore without entailing problems of available space in the valve body. A further possible shape of the cross-section of the spacer element 32 suitable to lengthen the path of the pitting from the corrosion trigger zone is the T shape (not shown in the figures). In the case of the L and F shapes (but this is also true for the T shape) the spacer element 32 could also be oriented in a different way to that shown in figures 5a and 5c, in particular rotated by 90° to that shown, so as to have for example the longer branch of the L shape oriented perpendicular, as opposed to parallel, to the x axis.

In brief, therefore, the interposition of a spacer element between the fitting and the valve body prevents such components of the valve from coming into contact with each other in a zone of the valve exposed to the outside environment and thus prevent an electric arc of great intensity from being triggered between these components in a damp and saline environment. In such conditions, corrosion occurs mainly as a result of the electric arc of lesser intensity triggered between the spacer element and the valve body, but on the one hand this is less aggressive and on the other must go around the spacer element (along a path which may be lengthened suitably defining the shape and dimensions of said spacer element) to reach the sealing zone between the valve body and the fitting.

Obviously, without prejudice to the principle of the invention, the embodiments and parts may be widely varied from what has been described and illustrated merely by way of example, while remaining within the sphere of protection as defined by the following claims.

## Claims

1. Fluid flow regulating device (10), particularly for automotive gas systems, comprising a body (12) made of a first material and a component (14) coupled to the body (12) and made of a second material different from said first material, wherein the component comprises a coupling portion (20) by means of which it is coupled to the valve body (12) and an abutment surface (24) lying in a plane perpendicular to the axis of the coupling portion (20), and wherein an o-ring (28) is mounted on the component (14) between the coupling portion (20) and the abutment surface (24),
the device (10) further comprising, between the body (12) and the component (14), a spacer element (32) of annular shape arranged around the component (14) so as to be in contact on the one hand against the body (12) and on the other against the component (14), thus avoiding direct contact between the latter and the body (12) in a zone of the device (10) exposed to the surrounding environment, the device being **characterized in that** said spacer element (32) is made of a third material having an electric potential value between those of said first material and of said second material.

2. Device according to claim 1, wherein the body (12) has a threaded cylindrical seat (22) and wherein the component (14) comprises a threaded cylindrical coupling portion (20) screwed in said seat (22).

3. Device according to claim 2, wherein the spacer element (32) is in contact on the one hand against the body (12) and on the other against said abutment surface (24).

4. Device according to any of the previous claims, wherein said first material is aluminium and said second material is stainless steel.

5. Device according to claim 4, wherein the spacer element (32) is made of a metal material.

6. Device according to claim 5, wherein the spacer element (32) is made of brass or copper.

7. Device according to any of the previous claims, wherein the spacer element (32) has a cross-section of L-, F- or T-like shape.

8. Device according to any of the previous claims, wherein the body (12) is the valve body of a multi-function valve and wherein the component (14) is a fitting for connection of a pipe to the valve body (12).

## Patentansprüche

1. Fluiddurchflussregelungsvorrichtung (10), insbesondere für Fahrzeuggassysteme, die einen aus einem ersten Material hergestellten Körper (12) und eine Komponente (14), die mit dem Körper gekoppelt und aus einem von dem ersten Material verschiedenen zweiten Material hergestellt ist, umfasst, wobei die Komponente einen Kopplungsabschnitt (20), mit dessen Hilfe sie mit dem Ventilkörper (12) gekoppelt ist, und eine Auflagefläche (24), die in einer Ebene senkrecht zu der Achse des Kopplungsabschnitts (20) liegt, umfasst, und wobei auf der Komponente (14) zwischen dem Kopplungsabschnitt (20) und der Auflagefläche (24) ein O-Ring (28) montiert ist, wobei die Vorrichtung ferner zwischen dem Körper (12) und der Komponente (14) ein Abstandshalterelement (32) mit ringförmiger Form, das um die Komponente (14) herum angeordnet ist, um einerseits mit dem Körper (12) und andererseits mit der Komponente (14) in Kontakt zu sein, umfasst, wobei auf diese Weise der direkte Kontakt zwischen der Letzteren und dem Körper (12) in einer Zone der Vorrichtung (10), die der umliegenden Umgebung ausgesetzt ist, vermieden wird, wobei die Vorrichtung **dadurch gekennzeichnet ist, dass** das Abstandshalterelement (32) aus einem dritten Material mit einem elektrischen Potentialwert zwischen denen des ersten Materials und des zweiten Materials hergestellt ist.

2. Vorrichtung nach Anspruch 1, wobei der Körper (12) einen zylindrischen Gewindesitz (22) hat und wobei die Komponente (14) einen zylindrischen Kopplungsabschnitt (20) umfasst, der in den Sitz (22) geschraubt ist.

3. Vorrichtung nach Anspruch 2, wobei das Abstandshalterelement (32) einerseits mit dem Körper (12) und andererseits mit der Auflagefläche (24) in Kontakt ist.

4. Vorrichtung nach einem der vorhergehenden Ansprüche, wobei das erste Material Aluminium ist und das zweite Material nicht rostender Stahl ist.

5. Vorrichtung nach Anspruch 4, wobei das Abstandshalterelement (32) aus einem Metallmaterial hergestellt ist.

6. Vorrichtung nach Anspruch 5, wobei das Abstandshalterelement (32) aus Messing oder Kupfer hergestellt ist.

7. Vorrichtung nach einem der vorhergehenden Ansprüche, wobei das Abstandshalterelement (32) einen Querschnitt mit L-, F- oder T-Form hat.

8. Vorrichtung nach einem der vorhergehenden Ansprüche, wobei der Körper (12) der Ventilkörper mit einem Mehrfunktionsventil ist, und wobei die Komponente (14) ein Anschlussstück für die Verbindung eines Rohrs mit dem Ventilkörper (12) ist.

## Revendications

1. Dispositif de régulation d'écoulement de fluide (10), en particulier pour des systèmes de gaz d'automobile, comprenant un corps (12) composé d'un premier matériau et un élément (14) accouplé au corps (12) et composé d'un deuxième matériau différent dudit premier matériau, dans lequel l'élément comprend une partie d'accouplement (20) au moyen de laquelle il est accouplé au corps de soupape (12) et une surface de butée (24) reposant dans un plan perpendiculaire à l'axe de la partie d'accouplement (20), et dans lequel un joint torique (28) est monté sur l'élément (14) entre la partie d'accouplement (20) et la surface de butée (24),
le dispositif (10) comprenant en outre, entre le corps (12) et l'élément (14), un élément d'espacement (32) de forme annulaire agencé autour de l'élément (14) de manière à être en contact d'un côté contre le corps (12) et de l'autre contre l'élément (14), ce qui permet d'éviter un contact direct entre ce dernier et le corps (12) dans une zone du dispositif (10) exposée à l'environnement alentour, le dispositif étant **caractérisé en ce que** ledit élément d'espacement (32) est composé d'un troisième matériau présentant une valeur de potentiel électrique entre celles dudit premier matériau et dudit deuxième matériau.

2. Dispositif selon la revendication 1, dans lequel le corps (12) comprend un siège cylindrique fileté (22) et dans lequel l'élément (14) comprend une partie d'accouplement cylindrique filetée (20) vissée dans ledit siège (22).

3. Dispositif selon la revendication 2, dans lequel l'élément d'espacement (32) est en contact d'un côté contre le corps (12) et de l'autre côté contre ladite surface de butée (24).

4. Dispositif selon l'une quelconque des revendications précédentes, dans lequel ledit premier matériau est de l'aluminium et ledit deuxième matériau est de l'acier inoxydable.

5. Dispositif selon la revendication 4, dans lequel l'élément d'espacement (32) est composé d'un matériau métallique.

6. Dispositif selon la revendication 5, dans lequel l'élément d'espacement (32) est composé de laiton ou de cuivre.

7. Dispositif selon l'une quelconque des revendications précédentes, dans lequel l'élément d'espacement (32) présente une section transversale en forme de L, F ou T.

8. Dispositif selon l'une quelconque des revendications précédentes, dans lequel le corps (12) est le corps de soupape d'une soupape multifonctions et dans lequel l'élément (14) est un raccord destiné au raccordement d'un tuyau au corps de soupape (12).
